# FASCICULE DE BREVET EUROPEEN

(11) **EP 1 641 372 B1**
(45) Date de publication et mention de la délivrance du brevet: **30.07.2008**
(21) Numéro de dépôt: 04767468.4
(22) Date de dépôt: 25.06.2004
(51) Int. Cl.: A47J 42/56, A47J 43/046

(54) **APPAREIL ELECTROMENAGER DE PREPARATION CULINAIRE COMPORTANT UN DISPOSITIF DE VERROUILLAGE ET UN DISPOSITIF DE SECURITE SANS INDEXAGE DU COUVERCLE**
HAUSHALTSGERÄT FÜR DIE KULINARISCHE ZUBEREITUNG MIT EINER VERRIEGELUNGSVORRICHTUNG UND EINER SICHERHEITSVORRICHTUNG OHNE WEITERSCHALTUNG DES DECKELS
CULINARY PREPARATION HOUSEHOLD APPLIANCE COMPRISING A LOCKING DEVICE AND A SECURITY DEVICE WITHOUT ANY INDEXING OF THE LID

(30) Priorité: 03.07.2003 FR 0308129
(43) Date de publication de la demande: 05.04.2006
(60) Demande divisionnaire: 08010503.4
(73) Titulaire: SEB S.A., 69130 Ecully (FR)
(72) Inventeur: BEAUDET, Jean-Yves, F-61410 Haleine (FR)
(86) Numéro de dépôt international: PCT/FR2004/001620
(87) Numéro de publication internationale: WO 2005/011454

(56) Documents cités:
- WO-A-02/051293
- FR-A- 2 830 423
- GB-A- 1 380 318
- US-A- 4 216 917
- US-A- 4 269 519
- US-A- 5 037 033
- US-B1- 6 474 578

## Description

La présente invention concerne le domaine technique des appareils électroménagers de préparation culinaire comportant un récipient de travail monté sur un boîtier contenant une motorisation.

Dans les appareils du type précité, le récipient de travail comporte un accessoire de travail rotatif à entraînement inférieur. Ces appareils comprennent notamment les appareils prévus pour le mélange de préparations liquides tels que les blenders, comportant une sortie d'entraînement sur le dessus du boîtier. Ces appareils comprennent également les robots culinaires comportant une ou plusieurs sorties d'entraînement sur le dessus du boîtier.

Il est connu des documents FR 2 370 546 ou WO 02/051293 un robot culinaire comportant un boîtier présentant un montant adjacent à un socle, un récipient de travail monté amovible sur le socle, un couvercle fermant le récipient de travail, et une pièce de maintien montée sur le montant, prévue pour coopérer avec le récipient de travail.

L'appareil du document FR 2 370 546 comporte une pièce de maintien actionnée par un levier agencé sur un côté du montant. Cette disposition permet d'utiliser un couvercle présentant une géométrie de révolution. Le récipient de travail et le couvercle sont facilement accessibles. Toutefois le levier est mobile selon un axe de rotation horizontal entre une position abaissée le long du montant et une position relevée éloignée du montant. La manipulation du levier peut entraîner un déplacement de l'appareil sur le plan de travail.

L'appareil du document WO 02/051293 comporte une pièce de maintien agencée sur le dessus du montant. La pièce de maintien est mobile selon un axe de rotation vertical. Le récipient de travail et le couvercle sont facilement accessibles. La manipulation de la pièce de maintien ne risque pas d'entraîner un déplacement de l'appareil sur le plan de travail. Toutefois, le couvercle doit être disposé d'une manière précise sur le récipient de travail.

L'objet de la présente invention est de proposer un appareil électroménager de préparation culinaire du type précité, dans lequel l'ergonomie de l'appareil est améliorée.

Un autre objet de la présente invention est de proposer un appareil électroménager de préparation culinaire du type précité, dans lequel le couvercle peut être mis en place sur le récipient de travail sans orientation particulière.

Un autre objet de la présente invention est de proposer un appareil électroménager de préparation culinaire du type précité, dans lequel le dispositif de verrouillage du couvercle sur le récipient de travail est particulièrement simple à utiliser.

Ces objets sont atteints avec un appareil électroménager de préparation culinaire, comportant un boîtier présentant un montant adjacent à un socle, un moteur agencé dans le boîtier, un récipient de travail monté amovible sur le socle, un couvercle fermant le récipient de travail, une pièce de maintien montée sur le montant, la pièce de maintien étant mobile entre une position déverrouillée, dans laquelle le couvercle peut être mis en place et retiré du récipient de travail disposé sur le socle, et une position de verrouillage, dans laquelle la pièce de maintien retient le couvercle sur le récipient de travail disposé sur le socle, un dispositif de sécurité comportant un interrupteur agencé dans le boîtier, une pièce mobile de sécurité actionnant l'interrupteur, un moyen de rappel élastique repoussant la pièce mobile de sécurité dans une position dans laquelle l'interrupteur interdit le fonctionnement du moteur, du fait que le couvercle peut être disposé sur le récipient de travail sans orientation particulière, le récipient de travail comportant une pièce de détection mobile et/ou déformable susceptible de coopérer d'une part avec le couvercle et d'autre part avec la pièce mobile de sécurité, la pièce de détection coopérant avec le couvercle retenu sur le récipient de travail par la pièce de maintien en position de verrouillage et repoussant la pièce mobile de sécurité contre le moyen de rappel élastique vers une position dans laquelle l'interrupteur est susceptible d'autoriser le fonctionnement du moteur. Grâce à la pièce de détection montée sur le récipient de travail, le couvercle n'actionne plus directement le dispositif de sécurité. Cette disposition permet de limiter les contraintes sur la forme du couvercle destinées à éviter l'actionnement du dispositif de sécurité par l'utilisateur. De ce fait, une indexation du couvercle sur le récipient de travail n'est plus nécessaire. La partie du couvercle coopérant avec la pièce de maintien et la partie du couvercle coopérant avec la pièce de détection peuvent présenter une géométrie de révolution, voire une géométrie de révolution partielle. Grâce au verrouillage sur le montant assuré par la pièce de maintien, la mise en place et le retrait du couvercle sur le récipient de travail ainsi que la mise en place et le retrait du récipient de travail sur le socle sont particulièrement aisés. La pièce de détection mobile et/ou déformable ne coopère pas nécessairement directement avec la pièce mobile de sécurité.

Avantageusement le montant présente une encoche latérale supérieure prévue pour recevoir la pièce de détection lorsque le récipient de travail est disposé sur le socle. Cette disposition permet d'éviter un accès latéral à la pièce de détection, tout en conservant une forme de récipient simple.

Avantageusement alors l'encoche latérale supérieure est recouverte par la pièce de maintien occupant la position de verrouillage. Cette disposition permet d'éviter un accès supérieur à la pièce de détection lorsque la pièce de maintien occupe la position de verrouillage.

Selon un mode de réalisation avantageux, la pièce de détection est montée coulissante dans un guidage extérieur issu du récipient de travail. D'autres modes de réalisation peuvent être envisagés, notamment une pièce de détection montée basculante ou pivotante sur le récipient de travail, ou encore une pièce de détection déformable.

Selon une forme de réalisation permettant de n'utiliser qu'un seul interrupteur, la pièce mobile de sécurité comporte une surface de came prévue pour actionner l'interrupteur, la pièce mobile de sécurité étant mobile selon une première direction sous l'action de la pièce de détection et selon une deuxième direction transversale sous l'action d'une tige de transmission de sécurité actionnée par la pièce de maintien. La tige de transmission de sécurité peut être actionnée directement ou non par la pièce de maintien.

Selon une autre forme de réalisation, la pièce de maintien occupant la position de verrouillage coopère avec un autre interrupteur appartenant au dispositif de sécurité.

Ces objets sont atteints aussi avec un appareil électroménager de préparation culinaire, comportant un boîtier présentant un montant adjacent à un socle, un moteur agencé dans le boîtier, un récipient de travail monté amovible sur le socle, un couvercle fermant le récipient de travail, une pièce de maintien montée sur le montant, la pièce de maintien étant mobile entre une position déverrouillée, dans laquelle le couvercle peut être mis en place et retiré du récipient de travail disposé sur le socle, et une position de verrouillage, dans laquelle la pièce de maintien retient le couvercle sur le récipient de travail disposé sur le socle, du fait que la pièce de maintien est formée par un capot monté basculant sur le montant selon un axe s'étendant en direction du récipient de travail placé sur le socle, ou en direction du couvercle fermant le récipient de travail placé sur le socle, et que le capot comporte un élément d'accrochage coopérant avec un élément de retenue monté dans le boîtier, l'élément d'accrochage, respectivement l'élément de retenue, étant monté mobile et étant associé à un bouton de déverrouillage. La stabilité de l'appareil est ainsi améliorée. De plus la pièce de maintien peut être agencée au-dessus d'un emplacement prévu pour recevoir un autre récipient de travail. Cette disposition peut être combinée à la disposition précédente relative à la pièce de détection, ou être utilisée de manière indépendante.

L'invention sera mieux comprise à l'étude de deux exemples de réalisation, pris à titre nullement limitatif, illustrés dans les figures annexées, dans lesquelles :
- la figure 1 est une vue en perspective d'un appareil de préparation culinaire comportant un dispositif de verrouillage supérieur et un dispositif de verrouillage inférieur selon un premier exemple de réalisation de l'invention,
- la figure 2 est une vue en perspective et en coupe partielle de la partie supérieure du boîtier de l'appareil montré à la figure 1, montrant le dispositif de verrouillage supérieur ainsi que le dispositif de déverrouillage,
- la figure 3 est une vue en perspective d'une partie du dispositif de déverrouillage visible à la figure 2, le boîtier ayant été partiellement retiré,
- la figure 4 est une vue en coupe partielle d'une partie du dispositif de verrouillage supérieur visible aux figures 2 et 3,
- la figure 5 est une vue en perspective d'une autre partie du boîtier de l'appareil montré à la figure 1,
- la figure 6 est une vue de côté du récipient de travail et du couvercle de l'appareil montré à la figure 1, dans laquelle la coque de la poignée du récipient de travail est illustrée schématiquement pour laisser voir un dispositif de verrouillage latéral agencé dans la poignée,
- la figure 7 est une vue en perspective de dessous du couvercle de l'appareil montré à la figure 1,
- la figure 8 est une vue en perspective de la poignée retirée du récipient de l'appareil montré à la figure 1,
- la figure 9 est une vue en perspective de l'appareil montré à la figure 1, dans laquelle le boîtier, le récipient de travail et le couvercle sont illustrés schématiquement pour laisser voir le dispositif de verrouillage latéral et le dispositif de verrouillage inférieur,
- la figure 10 est une vue en perspective selon une autre orientation de l'appareil montré à la figure 1, dans laquelle le boîtier, le récipient de travail et le couvercle sont illustrés schématiquement pour laisser voir le dispositif de verrouillage supérieur, le dispositif de verrouillage latéral et le dispositif de verrouillage inférieur,
- la figure 11 montre une partie du dispositif de verrouillage inférieur illustré à la figure 6,
- la figure 12 montre la liaison entre le dispositif de verrouillage supérieur illustré aux figures 2 et 4 et le dispositif de verrouillage inférieur illustré à la figure 10,
- la figure 13 est une vue de côté de l'appareil illustré à la figure 1 avec le capot fermé, le récipient de travail et le couvercle étant présents mais non représentés, une partie du boîtier ayant été ôtée pour montrer le dispositif de sécurité,
- la figure 14 est une vue en perspective de l'appareil montré à la figure 1, dans laquelle le dispositif de verrouillage latéral et le dispositif de verrouillage supérieur sont en position déverrouillée, le récipient de travail étant illustré schématiquement, le couvercle étant absent,
- la figure 15 est une vue en perspective de l'appareil montré à la figure 1, dans laquelle le dispositif de verrouillage latéral et le dispositif de verrouillage supérieur sont en position verrouillée, le récipient de travail et le couvercle étant illustrés schématiquement,
- la figure 16 est une vue en perspective de l'appareil montré à la figure 1, dans laquelle le dispositif de verrouillage latéral et le dispositif de verrouillage supérieur sont en position verrouillée, le récipient de travail étant illustré schématiquement, le couvercle étant absent.
- la figure 17 est une vue en perspective d'un deuxième exemple de réalisation, dans laquelle le dispositif de verrouillage latéral et le dispositif de verrouillage supérieur sont en position déverrouillée,
- la figure 18 est une vue en perspective de l'appareil montré à la figure 17, dans laquelle le dispositif de verrouillage latéral et le dispositif de verrouillage supérieur sont en position verrouillée,
- la figure 19 est une vue schématique d'une première partie du dispositif de sécurité de l'appareil illustré aux figures 17 et 18,
- la figure 20 est une vue schématique d'une deuxième partie du dispositif de sécurité et d'une partie du dispositif de verrouillage inférieur de l'appareil illustré aux figures 17 et 18.

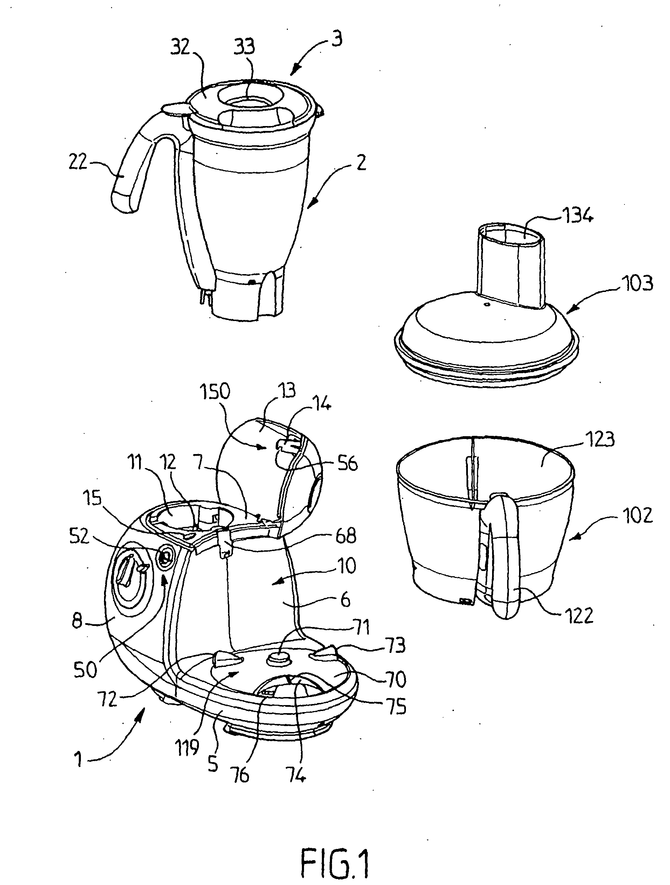

Un premier exemple de réalisation est illustré aux figures 1 à 16. La figure 1 montre un appareil de préparation culinaire comportant un boîtier 1, un récipient de travail 2 fermé par un couvercle 3, et un récipient de travail 102 fermé par un couvercle 103. Le récipient de travail 2 est prévu plus particulièrement pour les préparations liquides. Le récipient de travail 102 est de préférence un récipient de travail multifonction à accessoires de préparation rotatifs interchangeables. La coque extérieure du boîtier 1 comporte une base 5, un corps 6, un siège 7 et une façade 8.

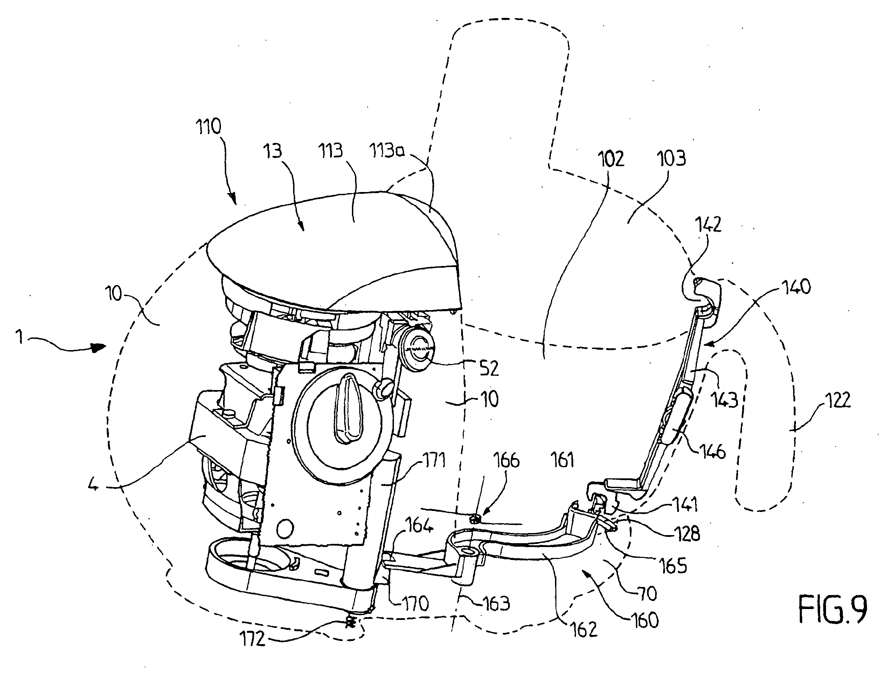

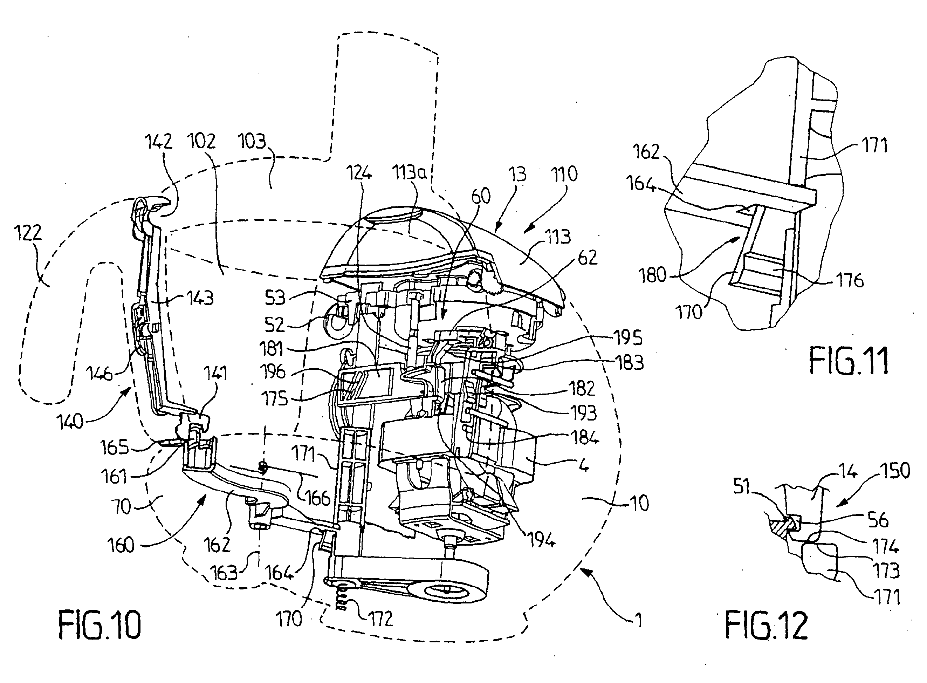

Le boîtier 1 présente un montant 10 dans lequel est logé un moteur 4 (visible aux figures 9 et 10). La partie supérieure du montant 10 présente un logement 11 dans lequel est agencé un axe 12 entraîné par le moteur. L'axe 12 porte un moyen d'entraînement, non représenté à la figure 1, prévu pour entraîner en rotation un accessoire de travail rotatif monté dans le fond du récipient de travail 2. Le montant 10 présente une encoche latérale supérieure 68.

Un capot 13 est monté basculant sur le montant 10. Plus particulièrement, le capot est monté pivotant sur l'arrière du montant 10, à l'opposé de la façade 8. L'axe de rotation du capot 13 s'étend en direction du récipient de travail 102 et du couvercle 103. Le capot 13 permet de coiffer le logement 11. Le capot 13 comporte une languette inférieure 14 prévue pour être engagée dans une découpe 15 ménagée sur le dessus du montant 10. Le capot 13 comporte un élément d'accrochage 56, tel que par exemple une encoche. L'élément d'accrochage 56 est ménagé sur la languette inférieure 14. Le logement 11 est ménagé dans le siège 7. Le capot 13 est monté pivotant sur le corps 6. La découpe 15 est ménagée dans le siège 7.

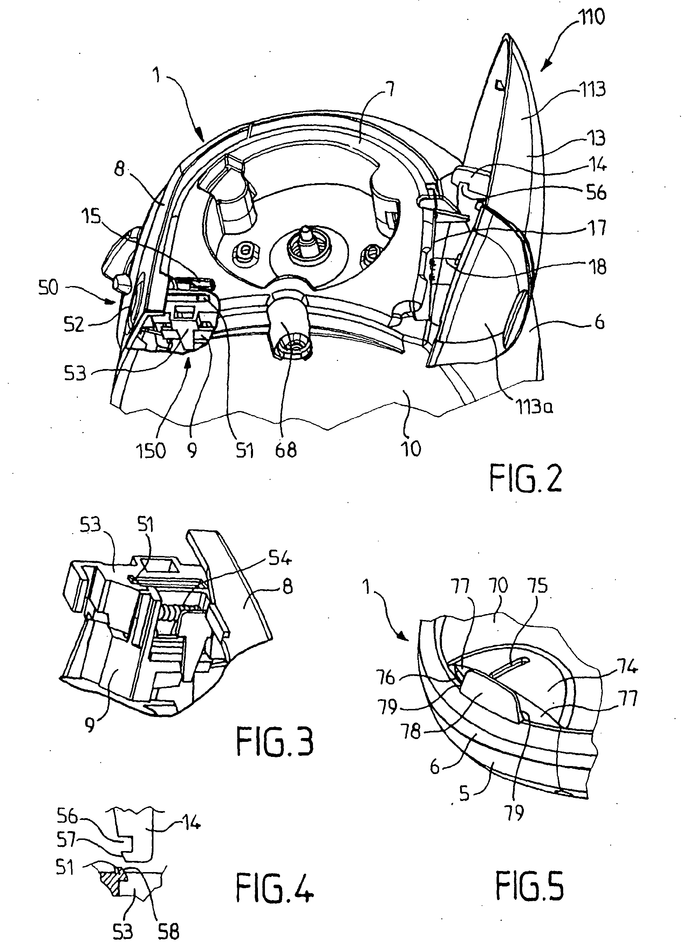

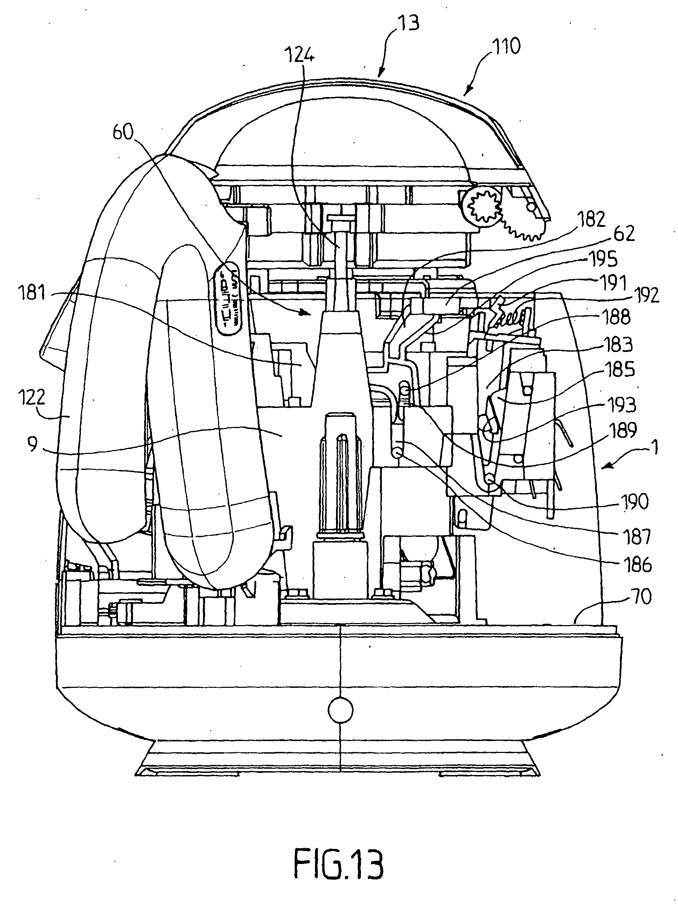

Le montant 10 est adjacent à un socle 70 du boîtier 1. Le récipient de travail 102 est monté amovible sur le socle 70. A cet effet, le socle 70 présente un passage 71 pour un axe entraîneur prévu pour entraîner un accessoire de travail rotatif agencé dans le récipient de travail 102, non représenté aux figures, l'axe entraîneur étant visible à la figure 13. Le socle 70 comporte trois bossages supérieurs 72, 73, 74. Le bossage supérieur 74, mieux visible à la figure 5, présente une découpe supérieure 75 et une découpe latérale extérieure 76.

Le récipient de travail 2 comporte une poignée 22 et une ouverture supérieure susceptible d'être fermée par le couvercle 3. Le couvercle 3 comporte une couronne supérieure 32 percée d'un orifice de remplissage 33.

Le récipient de travail 102 comporte une poignée 122 et une ouverture supérieure 123 susceptible d'être fermée par le couvercle 3. Le couvercle 3 comporte une goulotte 134.

Le boîtier 1 comporte un dispositif de déverrouillage 50 prévu pour libérer le capot 13 et un dispositif de verrouillage supérieur 150 prévu pour retenir le couvercle 103 fermant le récipient de travail 102 disposé sur le socle 70.

La figure 2 montre plus en détail le dispositif de déverrouillage 50 et le dispositif de verrouillage supérieur 150. Une partie du corps 6 et une partie du siège 7 ont été retirées pour une meilleure compréhension des mécanismes. Le capot 13 est monté pivotant sur une tige 17 montée sur le corps 6. Un moyen de rappel élastique 18 permet de relever le capot 13. Le capot 13 comporte une trappe 113 montée basculante sur le boîtier 1. Une paroi latérale de retenue 113a est formée sur la trappe. La paroi latérale de retenue 113a est par exemple obtenue par surmoulage de matière élastomère sur la trappe 113. La paroi latérale de retenue 113a appartient au dispositif de verrouillage supérieur 150. La paroi latérale de retenue 113a permet d'immobiliser en rotation le couvercle 103 par frottement.

Le dispositif de verrouillage supérieur 150 comporte un élément de retenue 51 monté mobile dans le boîtier 1. L'élément de retenue 51 est agencé dans le montant 10 derrière la découpe 15. L'élément de retenue 51 est susceptible de coopérer avec l'élément d'accrochage 56 agencé sous le capot 13. L'élément de retenue 51 est entraîné par un bouton de déverrouillage 52 appartenant au dispositif de déverrouillage 50. Tel que bien visible sur la figure 1, le bouton de déverrouillage 52 est monté dans le boîtier 1.

Le bouton de déverrouillage 52 associé à l'élément de retenue 51 est monté mobile contre un moyen de rappel élastique 54, visible sur la figure 3. Le bouton de déverrouillage 52 est agencé sur la façade 8. Le bouton de déverrouillage 52 est issu d'une glissière 53 montée coulissante dans le boîtier 1. La glissière 53 coulisse sur un bâti 9 monté dans le boîtier 1. Le bâti 9 supporte le moteur 4, visible aux figures 9 et 10.

La figure 3 montre la glissière 53 coulissant sur le bâti 9, le siège 7 et le corps 6 ayant été ôtés. Le moyen de rappel élastique 54 est monté entre le bâti 8 et la glissière 53. Le bouton de déverrouillage 52 est ainsi monté mobile contre le moyen de rappel élastique 54. L'élément de retenue 51 prévu pour coopérer avec l'élément d'accrochage 56 du capot 13 est ménagé sur la glissière 53.

La figure 4 montre l'élément d'accrochage 56 formé sur la languette 14 et l'élément de retenue 51 formé sur la glissière 53. L'élément d'accrochage 56 est prolongé par une surface biseautée inférieure 57 et l'élément de retenue 51 présente une surface biseautée supérieure 58 pour permettre de repousser la glissière 53 contre le moyen de rappel élastique 54 (visible à la figure 3) lorsque le capot 13 est rabattu sur le montant 10. L'élément d'accrochage 56 et l'élément de retenue 51 appartiennent au dispositif de verrouillage supérieur 150.

La figure 5 montre le bossage supérieur 74. La découpe latérale extérieure 76 est ménagée dans une paroi latérale extérieure 77 servant également à centrer le récipient de travail 102 sur le socle 70. La paroi latérale extérieure 77 coopère avec la face interne de la jupe 126. Le bossage supérieur 74 comporte une protubérance latérale externe 78 présentant deux faces latérales 79 servant à bloquer en rotation le récipient de travail 102 sur le socle 70.

Le bossage supérieur 72 et le bossage supérieur 73 visibles à la figure 1 comportent également une paroi latérale extérieure servant également à centrer le récipient de travail 102 sur le socle 70, et une protubérance latérale externe présentant deux faces latérales servant à bloquer en rotation le récipient de travail 102 sur le socle 70.

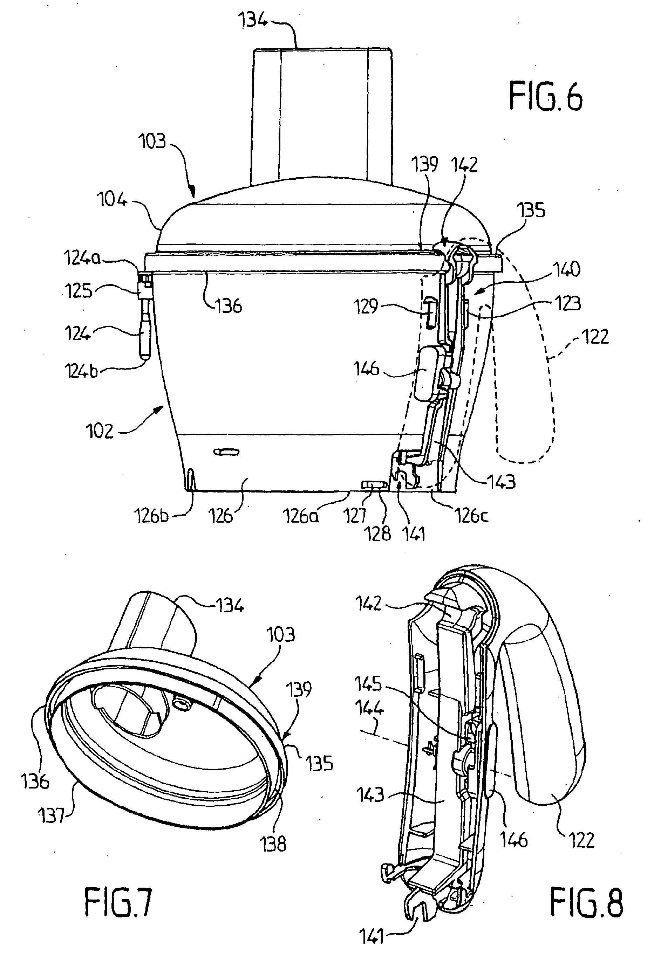

La figure 6 montre le couvercle 103 sur le récipient de travail 102. La coque de la poignée 122 a été retirée pour montrer un dispositif de verrouillage latéral 140 agencé sur le récipient de travail 102. Plus particulièrement, le dispositif de verrouillage latéral 140 est monté dans la poignée 122. Le dispositif de verrouillage latéral 140 coopère avec un dispositif de verrouillage inférieur 160 agencé dans le boîtier 1, visible aux figures 9 et 10. Le dispositif de verrouillage latéral 140 comporte un organe de commande inférieur 141 et un organe de verrouillage supérieur 142. L'organe de commande inférieur 141 coopère avec le dispositif de verrouillage inférieur 160. L'organe de verrouillage supérieur 142 coopère avec un bord périphérique supérieur 135 du couvercle 103. Le bord périphérique supérieur 135 forme un organe de retenue supérieur 139. L'organe de commande inférieur 141 et l'organe de verrouillage supérieur 142 appartiennent à un levier basculant 143. Le levier basculant 143 est agencé dans la poignée 122. Plus particulièrement, le levier basculant 143 est monté pivotant dans la coque de la poignée 122. La poignée 122 est amovible par rapport au récipient de travail 102. A cet effet le récipient de travail 102 présente des éléments d'accrochage 129.

La paroi latérale de retenue 113a du dispositif de verrouillage supérieur 150 coopère avec une paroi supérieure 104 du couvercle 103. La paroi supérieure 104 est de révolution. Ainsi le couvercle 103 peut être disposé sur le récipient de travail 102 sans orientation particulière.

Le récipient de travail 102 comporte une pièce de détection 124 appartenant à un dispositif de sécurité 60, mieux visible aux figures 12, 14, 15 et 16. Plus particulièrement, la pièce de détection 124 est montée coulissante dans un guidage extérieur 125 issu du récipient de travail 102. La pièce de détection 124 comporte une partie supérieure 124a, prévue pour coopérer avec un bord périphérique inférieur 136 du couvercle 103, et une partie inférieure 124b, prévue pour coopérer avec un élément du dispositif de sécurité 60.

Le récipient de travail 102 présente en sa partie inférieure une jupe 126 présentant des encoches inférieures 126a, 126b, 126c prévues pour coopérer respectivement avec les bossages supérieurs 72, 73, 74 du socle 70. Les encoches inférieures 126a, 126b, 126c et les bossages supérieurs 72, 73, 74 forment des moyens de blocage en rotation 119 du récipient de travail 102 par rapport au boîtier 1. La jupe 126 forme, avec les parois latérales extérieures des bossages supérieurs 72, 73, 74, des moyens de centrage du récipient de travail 102 par rapport au boîtier 1.

Le récipient de travail 102 présente en sa partie inférieure une découpe inférieure 127. La découpe inférieure 127 forme un organe de retenue inférieur 128. Le dispositif de verrouillage inférieur 160 coopère avec l'organe de retenue inférieur 128.

Tel que montré à la figure 7, le couvercle 103 présente une géométrie de révolution au niveau du bord périphérique inférieur 136 et du bord périphérique supérieur 135. Le couvercle 103 comporte une jupe 137 entourée à distance par le bord périphérique inférieur 136, formant ainsi une rainure annulaire inférieure 138 prévue pour recevoir le bord supérieur du récipient de travail 102. Le bord supérieur du récipient de travail 102 présente également une géométrie de révolution.

La figure 8 montre la poignée 122 retirée du récipient de travail 102. Le levier basculant 143 est monté pivotant autour de l'axe 144. L'organe de commande inférieur 141 et l'organe de verrouillage supérieur 142 sont agencés de part et d'autre de l'axe 144. Un verrou de poignée 145 est monté coulissant sur l'axe 144. Le verrou de poignée 145 est associé à un bouton de déverrouillage de poignée 146 mobile contre un ressort de rappel, non visible aux figures. Le verrou de poignée 145 coopère avec une butée de verrouillage ménagée sur le récipient de travail 102, non visible aux figures.

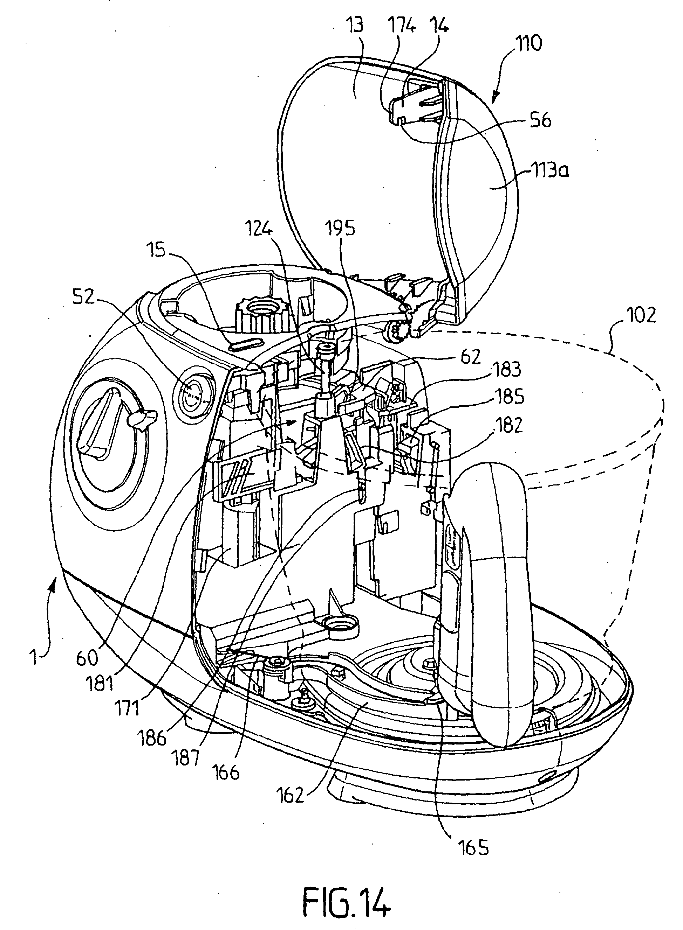

La figure 9 montre le dispositif de verrouillage latéral 140, et une partie du dispositif de verrouillage inférieur 160. Le dispositif de verrouillage inférieur 160 comporte un organe de transmission latéral 161 coopérant avec l'organe de commande inférieur 141. L'organe de transmission latéral 161 est issu d'un levier pivotant 162 monté mobile en rotation autour d'un axe 163 par rapport au boîtier 1 dans le socle 70. Le levier pivotant 162 comporte un organe de commande latéral 164 coopérant avec un organe de transmission inférieur 170 appartenant à une tige de transmission de verrouillage 171 agencée dans le montant 10. La tige de transmission de verrouillage 171 est montée coulissante dans le bâti 9, non représenté à la figure 10, mais visible aux figures 14 à 16, selon une direction sensiblement verticale. La tige de transmission de verrouillage 171 est montée mobile contre un moyen de rappel élastique 172. L'organe de transmission inférieur 170 est formé par une surface de came prévue pour entraîner en rotation le levier pivotant 162 lorsque le capot 13 est rabattu sur le boîtier 1. Le dispositif de verrouillage inférieur 160 comporte un organe de verrouillage inférieur 165 agencé dans le socle 70. L'organe de verrouillage inférieur 165 appartient au levier pivotant 162 agencé dans le socle 70. L'organe de verrouillage inférieur 165 peut sortir par la découpe latérale extérieure 76 du socle 70, visible sur la figure 5. L'organe de verrouillage inférieur 165 est prévu pour s'engager dans la découpe inférieure 127 du récipient de travail 102. Le levier pivotant 162 est associé à un moyen de rappel élastique 166 prévu pour rentrer l'organe de verrouillage inférieur 165 dans la découpe latérale extérieure 76.

La figure 10 montre le dispositif de verrouillage latéral 140, le dispositif de verrouillage inférieur 160, et le dispositif de sécurité 60. La tige de transmission de verrouillage 171 comporte un organe de commande supérieur 173 coopérant avec un organe de transmission inférieur 174 issu du capot 13, visible à la figure 12. Plus particulièrement, l'organe de transmission inférieur 174 est ménagé sur l'extrémité libre de la languette inférieure 14.

Le dispositif de sécurité 60 comporte une tige de transmission de sécurité 181. La tige de transmission de sécurité 181 est montée coulissante dans le bâti 9, non représenté à la figure 10, selon une direction sensiblement horizontale. La tige de transmission de sécurité 181 comporte une rainure oblique 196 dans laquelle coulisse un tenon 175 issu de la tige de transmission de verrouillage 171. La tige de transmission de sécurité 181 entraîne en rotation une pièce mobile de sécurité 182. La pièce mobile de sécurité 182 présente une surface de came 195 coopérant avec une pièce de transmission intermédiaire 62 montée mobile en rotation sous le siège 7 visible à la figure 1. La pièce de transmission intermédiaire 62 est mobile contre un moyen de rappel élastique, non montré aux figures. La pièce de transmission intermédiaire 62 coopère avec un levier de commande 183 monté pivotant autour d'un axe 184. Le levier de commande 183 coopère avec un interrupteur 185, non représenté à la figure 10, visible à la figure 13. La pièce de détection 124 appartenant au récipient de travail 102 coopère également avec la pièce mobile de sécurité 182. A cet effet la pièce mobile de sécurité 182 peut être déplacée contre un moyen de rappel élastique 194.

La figure 11 montre un mécanisme de blocage 180 de la tige de transmission de verrouillage 171. L'organe de transmission inférieur 170 comporte une conformation de blocage 176 dans laquelle s'engage l'organe de commande latéral 164 du levier pivotant 162 repoussé par le moyen de rappel élastique 166, illustré aux figures 9 et 10, lorsque la poignée 122 est absente du récipient de travail 102 en place sur le socle 70, ou que le récipient de travail 102 n'est pas en place sur le socle 70.

La figure 13 montre le dispositif de sécurité 60 dans la configuration où le capot 13 est verrouillé sur le couvercle 103 placé sur le récipient de travail 102 (non représentés aux figures) agencé sur le socle 70. Le corps 6 du boîtier 1 a été retiré pour laisser apparaître le bâti 9 supportant les pièces du dispositif de sécurité 60.

La pièce mobile de sécurité 182 est guidée en translation dans le bâti 9 au moyen d'un axe 186 coulissant dans une rainure 187 du bâti 9. La pièce mobile de sécurité 182 est entraînée en rotation par un axe 188 monté dans une rainure 189 de la tige de transmission de sécurité 181. La rotation de la pièce mobile de sécurité 182 s'effectue autour de l'axe 186. La pièce mobile de sécurité 182 est entraînée en translation dans la rainure 189 par la pièce de détection 124 mise en place dans l'encoche latérale supérieure 68 du montant 10 (visible à la figure 2). Le levier de commande 183 est monté mobile en rotation dans le bâti 9 au moyen d'un axe 190. Le levier de commande 183 comporte une patte élastique de commande 191 montée contre un moyen de rappel élastique 192. La patte élastique de commande 191 est actionnée par la pièce de transmission 62. Le levier de commande 183 comporte une patte d'actionnement 193 coopérant avec l'interrupteur 185. La patte élastique de commande 191 permet de limiter les efforts exercés sur l'interrupteur 185 et d'augmenter la course de la pièce de transmission 62.

Pour une meilleure compréhension des mécanismes, le corps 6 a été retiré des figures 14 à 16. De plus, le récipient de travail 102 et le cas échéant le couvercle 103 sont représentés en pointillés pour plus de clarté.

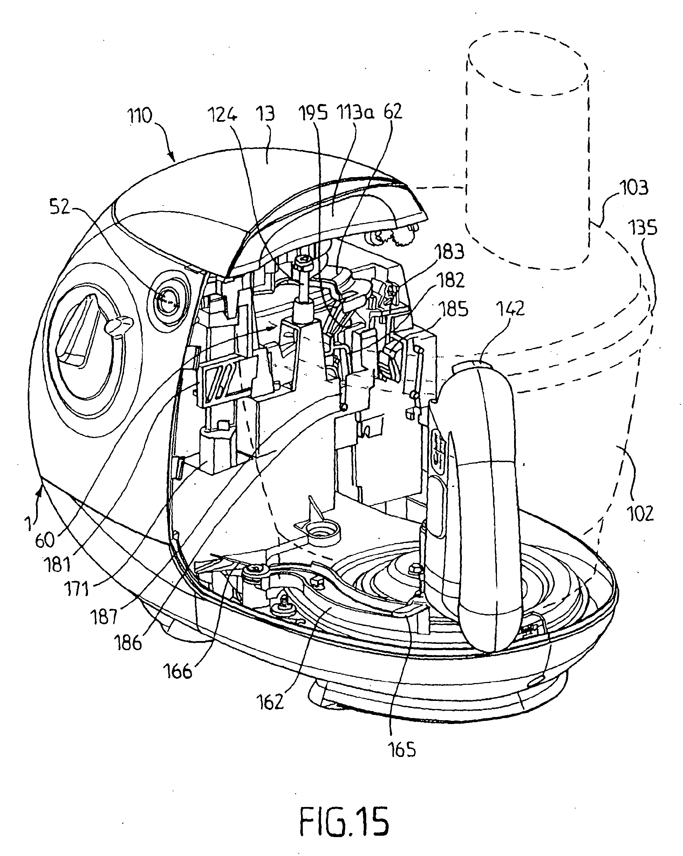

Le capot 13 forme une pièce de maintien 110 montée basculant sur le montant 10, mobile entre une position déverrouillée, illustrée à la figure 14, dans laquelle le couvercle 103 peut être mis en place et retiré sur le récipient de travail 102, et une position de verrouillage, illustrée à la figure 15, dans laquelle la pièce de maintien 110 maintient le couvercle sur le récipient de travail 102 disposé sur le socle 70. La pièce de maintien 110 coopère avec le dispositif de verrouillage inférieur 160. L'organe de verrouillage inférieur 165 est mobile entre une position de repos, en l'absence de récipient de travail 102 sur le socle 70, dans laquelle le moyen de rappel élastique 166 repousse l'organe de commande latéral 164 contre la conformation de blocage 176, tel qu'illustré à la figure 11, une position rétractée, illustrée à la figure 14, dans laquelle le récipient de travail 102 peut être retiré du socle 70, et une position sortie, illustrée à la figure 15, dans laquelle l'organe de verrouillage inférieur 165 retient l'organe de retenue inférieur 128, visible sur la figure 6. L'organe de verrouillage supérieur 142 (visible sur la figure 6) est mobile entre une position rétractée, illustrée à la figure 14, dans laquelle le couvercle 103 peut être mis en place ou retiré du récipient de travail 102, et une position sortie, illustrée à la figure 15, dans laquelle l'organe de verrouillage supérieur 142 retient l'organe de retenue supérieur 139, visible sur la figure 6.

Le fonctionnement de la présente invention est le suivant.

Lorsque la pièce mobile 110 formée par le capot 13 occupe la position déverrouillée illustrée à la figure 14, l'utilisateur peut mettre en place le récipient de travail 102 et le couvercle 103. Lorsque l'utilisateur place le récipient de travail 102 sur le socle 70, les encoches 126a, 126b, 126c viennent en place sur les bossages supérieurs 72, 73, 74. L'organe de commande inférieur 141 du dispositif de verrouillage latéral 140 s'engage dans la découpe supérieure 75 et déplace l'organe de transmission latéral 161 mobile contre le moyen de rappel élastique 166 vers une position d'attente dans laquelle l'organe de commande latéral 164 est dégagé de la conformation de blocage 176. La tige de transmission de verrouillage 171 est repoussée vers le haut par le moyen de rappel élastique 172. La tige de transmission de sécurité 181 occupe une position d'attente. La pièce mobile de sécurité 182 est repoussée vers le haut et éloignée de l'interrupteur 185 par le moyen de rappel élastique 194. L'axe 186 est en position haute dans la rainure 187. La pièce de détection 124 est en position haute dans l'encoche latérale supérieure 68. La pièce de transmission 62 est repoussée par le moyen de rappel associé vers la pièce mobile de sécurité 182. Le levier de commande 183 est éloigné de l'interrupteur 185, du fait que la surface de came 195 ne déplace pas suffisamment la pièce de transmission 62.

Lorsque l'utilisateur met en place le couvercle 103 sur le récipient de travail 102, le bord périphérique inférieur 136 vient en contact avec la pièce de détection 124. Lorsque l'utilisateur referme le capot 13 sur le montant 10, tel que montré à la figure 15, l'élément d'accrochage 56 vient en prise avec l'élément de retenue 51, tel que montré à la figure 12. La paroi latérale de retenue 113a du capot 13 maintient la paroi supérieure 104 du couvercle 103. La pièce mobile 110 formée par le capot 13 occupe la position de verrouillage. Le dispositif de verrouillage supérieur 150 est verrouillé.

Par ailleurs, la pièce de maintien 110 coopère avec le dispositif de verrouillage inférieur 160 par l'intermédiaire de la tige de transmission de verrouillage 171. L'organe de transmission inférieur 174 repousse l'organe de commande supérieur 173 du dispositif de verrouillage inférieur 160, tel que montré à la figure 12. La tige de transmission de verrouillage 171 est repoussée vers le bas contre le moyen de rappel élastique 172. L'organe de transmission inférieur 170 déplace l'organe de commande latéral 164 contre le moyen de rappel élastique 166. Le levier pivotant 162 pivote autour de l'axe 163. L'organe de verrouillage inférieur 165 sort par la découpe latérale extérieure 76 et s'engage dans l'organe de retenue inférieur 128 du récipient de travail 102. Le récipient de travail 102 est ainsi maintenu sur le socle 70. Le dispositif de verrouillage inférieur 160 est verrouillé.

De plus, l'organe de transmission latéral 161 repousse l'organe de commande inférieur 141. Le levier basculant 143 tourne autour de l'axe 144. L'organe de verrouillage supérieur 142 vient recouvrir partiellement le bord périphérique supérieur 135 du couvercle 103. Le dispositif de verrouillage latéral 140 est verrouillé.

Ainsi le couvercle 103 et le récipient de travail 102 sont maintenus en trois points. Le récipient de travail 102 est mis en place sur le socle 70 selon une orientation prédéterminée, mais sans nécessiter de rotation ultérieure pour obtenir un verrouillage. Le couvercle 103 est mis en place sur le récipient de travail 102 sans orientation prédéterminée, ce qui offre une liberté de positionnement de la goulotte 134. Le verrouillage du couvercle 103 et du récipient de travail 102 s'effectue simplement en manoeuvrant la pièce de maintien 110 formée par le capot 13.

En outre, la tige de transmission de sécurité 181 est déplacée vers sa position active par la tige de transmission de verrouillage 171. La pièce mobile de sécurité 182 est repoussée latéralement par la tige de transmission de sécurité 181 contre le moyen de rappel élastique 194. De plus, la pièce mobile de sécurité 182 est repoussée vers le bas par la pièce de détection 124. L'axe 186 est descendu dans la rainure 187. La pièce de transmission 62 est repoussée par la pièce mobile de sécurité 182 vers le levier de commande 183. La surface de came 195 permet un déplacement suffisant de la pièce de transmission 62 pour que le levier de commande 183 occupe une position active et actionne l'interrupteur 185. Le dispositif de sécurité 60 permet alors le fonctionnement de l'appareil.

Par contre, si le capot 13 est rabattu en l'absence du couvercle 103, le dispositif de verrouillage supérieur 150, le dispositif de verrouillage inférieur 160, le dispositif de verrouillage latéral 140 occupent les configurations précédemment décrites, mais la pièce de détection 124 ne peut repousser la pièce mobile de sécurité 182 vers le bas. De ce fait la surface de came 195 ne repousse pas suffisamment la pièce de transmission intermédiaire 62, et l'interrupteur 185 ne peut être actionné. Le dispositif de sécurité 60 ne permet pas le fonctionnement de l'appareil.

De plus, la pièce de détection 124 est alors logée dans l'encoche latérale supérieure 68 du montant 10, derrière le récipient de travail 102, et sous la pièce de maintien 110 formée par le capot 13. De ce fait, la pièce de détection 124 ne peut être atteinte par l'utilisateur.

La pièce mobile de sécurité 182 est mobile selon une première direction sous l'action de la pièce de détection 124 et selon une deuxième direction transversale sous l'action de la tige de transmission de sécurité 181 actionnée par la pièce de maintien 110 par l'intermédiaire de la tige de transmission de verrouillage 171. Ces dispositions permettent de n'utiliser qu'un seul interrupteur 185 pour le dispositif de sécurité 60.

Le déverrouillage du couvercle 103 et du récipient de travail 102 s'effectue simplement en actionnant le bouton de déverrouillage 52. L'élément de retenue 51 est alors éloigné de l'élément d'accrochage 56, et le capot 13 est ramené en position relevée par le moyen de rappel élastique 18. L'utilisateur peut alors retirer le couvercle 103 et le récipient de travail 102.

La tige 17 formant l'axe de basculement du capot 13 s'étend en direction du récipient de travail placé sur le socle, ainsi qu'en direction du couvercle 103 fermant le récipient de travail 102 placé sur le socle 70. Une bonne stabilité de l'appareil lors du verrouillage et du déverrouillage du couvercle 103 est ainsi obtenue.

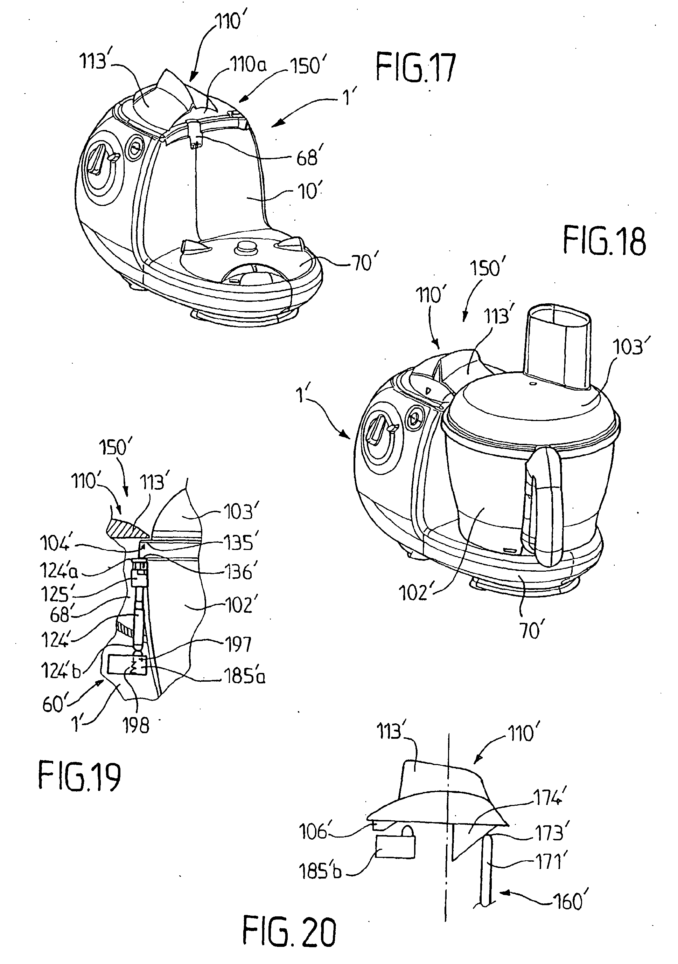

Un deuxième exemple de réalisation est illustré aux figures 17 à 20. Cet exemple de réalisation diffère de l'exemple de réalisation précédent en ce que le boîtier 1' comporte une pièce de maintien 110' formée par un verrou rotatif 113' monté pivotant sur le montant 10'. Le verrou rotatif 113' est agencé sur le dessus du montant 10'. L'appareil comporte un dispositif de verrouillage supérieur 150' et un dispositif de sécurité 60', le dispositif de verrouillage inférieur et le dispositif de verrouillage latéral n'étant pas modifiés. La paroi supérieure 104' du couvercle 103' maintenue par la pièce de maintien 110' est formée par le bord périphérique supérieur 135' du couvercle 103'. La pièce de maintien 110' comporte une découpe 110'a prévue pour laisser le passage de la paroi supérieure 104' du couvercle 103', visible sur la figure 19.

La figure 17 montre le verrou rotatif 113' dans une position déverrouillée, dans laquelle le couvercle 103' peut être mis en place et retiré du récipient de travail 102' disposé sur le socle 70'. L'organe de verrouillage inférieur du dispositif de verrouillage inférieur est en position rétractée dans le socle 70'.

La figure 18 montre le verrou rotatif 113' dans une position de verrouillage, dans laquelle le verrou rotatif 113' maintient le couvercle 103' sur le récipient de travail 102' disposé sur le socle 70'.

La figure 19 montre plus précisément le dispositif de verrouillage supérieur 150'. Le verrou rotatif 113' amené en position de verrouillage. Le verrou rotatif 113' retient le bord périphérique supérieur 135' du couvercle 103'.

La figure 19 montre également une partie du dispositif de sécurité 60'. La pièce de détection 124' est montée coulissante dans le guidage extérieur 125' issu du récipient de travail 102'. La pièce de détection 124' comporte une partie supérieure 124'a, prévue pour coopérer avec le bord périphérique inférieur 136' du couvercle 103', et une partie inférieure 124'b, prévue pour coopérer avec une pièce mobile 197 actionnant un interrupteur 185'a appartenant au dispositif de sécurité 60'. L'interrupteur 185'a est monté dans le boîtier 1'. Un moyen de rappel élastique 198 est prévu pour repousser la pièce mobile 197 vers une position dans laquelle l'interrupteur 185'a n'autorise pas le fonctionnement du moteur.

Tel que représenté à la figure 19 la pièce de détection 124' coopère avec le couvercle 103' maintenu sur le récipient de travail 102' sur le socle 70' par la pièce de maintien 110' en position de verrouillage et repousse la pièce mobile 197 contre le moyen de rappel élastique 198 vers une position dans laquelle l'interrupteur 185'a est susceptible d'autoriser le fonctionnement du moteur 4.

La figure 20 montre une deuxième partie du dispositif de sécurité 60' commandée par un organe de commande inférieur 106' issu de la pièce de maintien 110'. L'organe de commande inférieur 106' coopère avec un autre interrupteur 185'b. L'organe de commande inférieur 106' est formé par exemple par une surface de came. La figure 20 montre également la pièce de maintien 110' présentant un organe de transmission inférieur formé par une surface de came 174' susceptible de coopérer avec un organe de commande supérieur 173' de la tige de transmission de verrouillage 171' du dispositif de verrouillage inférieur 160'.

Pour verrouiller ou déverrouiller le couvercle 103' sur le récipient de travail 102' disposé sur le socle 70', l'utilisateur tourne la pièce de maintien 110' dans un sens ou dans l'autre. Lorsque la pièce de maintien 110' occupe la position verrouillée représentée aux figures 18 et 19, la pièce de détection 124' est logée dans l'encoche latérale supérieure 68' du montant 10', derrière le récipient de travail 102', sous la pièce de maintien 110' formée par le verrou rotatif 113'. De ce fait, la pièce de détection 124' ne peut être atteinte par l'utilisateur. Le bord périphérique supérieur 135' et le bord périphérique inférieur 136' du couvercle 103' permettent un positionnement sans indexage du couvercle 103' sur le récipient de travail 102'.

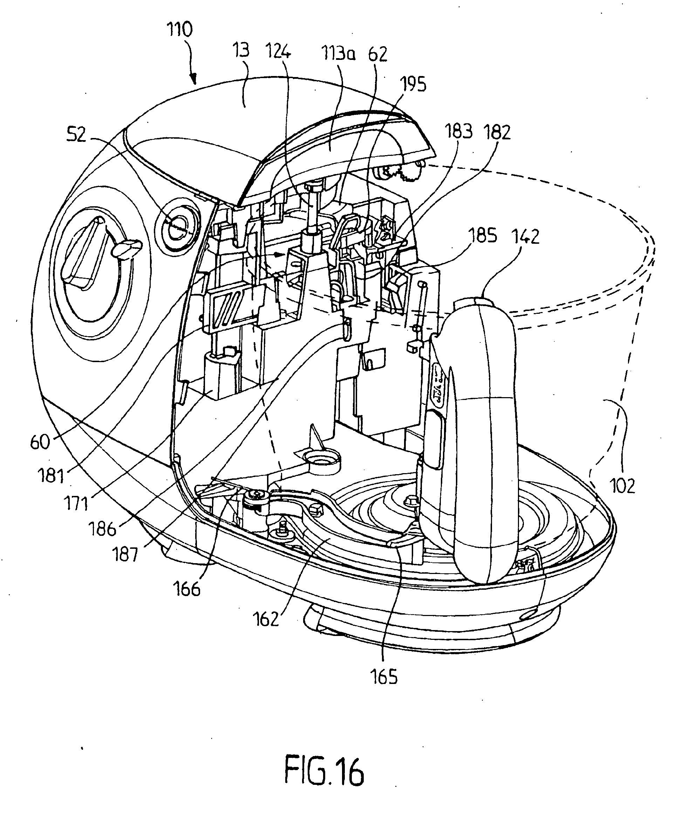

Ainsi la pièce de détection 124, 124' est mobile entre une position inactive dans laquelle le dispositif de sécurité 60, 60' n'autorise pas le fonctionnement du moteur 4, illustrée aux figures 14 et 16 et une position active dans laquelle le dispositif de sécurité 60, 60' est susceptible d'autoriser le fonctionnement du moteur 4, illustrée aux figures 6, 10, 13, 15 et 19. La pièce de détection 124, 124' est logée dans l'encoche latérale supérieure 68 ; 68' lorsque le récipient de travail 102, 102' est disposé sur le socle 70, 70. La pièce de détection 124, 124' est alors recouverte par la pièce de maintien 110 ; 110' occupant la position de verrouillage.

A titre de variante, d'autres moyens de centrage du récipient de travail 102 sur le boîtier 1 peuvent être envisagés, notamment une paroi latérale annulaire externe ou interne.

A titre de variante, l'organe de retenue supérieur 139, la paroi supérieure 104, 104', le bord périphérique inférieur 136, 136' du couvercle 103, 103' ne présentent pas nécessairement une géométrie de révolution. Dans ce cas, la liberté de positionnement en rotation du couvercle 103, 103' n'est que partielle.

A titre de variante, la pièce de détection 124, 124' n'est pas nécessairement montée coulissante sur le récipient de travail 102, 102'. Notamment, le récipient de travail 102, 102' peut comporter une pièce de détection montée pivotante ou basculante. La pièce de détection 124, 124' n'est pas nécessairement mobile par rapport au récipient de travail 102, 102', mais pourrait aussi être déformable.

A titre de variante, la pièce de détection 124, 124' ne coopère pas nécessairement directement avec la pièce mobile de sécurité 182, 197, mais peut actionner un autre élément du dispositif de sécurité 60, 60' coopérant avec la pièce mobile de sécurité 182, 197. La pièce mobile de sécurité 182, 197 n'est pas nécessairement montée directement contre le moyen de rappel élastique 194, 198.

A titre de variante, la poignée du récipient de travail n'est pas nécessairement amovible.

A titre de variante, le dispositif de verrouillage latéral pourrait être supprimé. A titre de variante, le dispositif de verrouillage inférieur pourrait être supprimé, la partie de la tige de transmission de verrouillage 171 du premier exemple de réalisation coopérant avec la tige de transmission de sécurité 181 étant conservée pour pouvoir déplacer la pièce mobile de sécurité 182.

A titre de variante, d'autres constructions peuvent être envisagées pour les dispositifs de verrouillage, notamment pour le dispositif de verrouillage supérieur.

A titre de variante pour le premier exemple de réalisation, le bouton de déverrouillage pourrait être associé à un élément d'accrochage monté mobile dans le capot. De préférence, le bouton de déverrouillage est monté dans le boîtier, pour faciliter la construction du dispositif de sécurité.

A titre de variante pour le premier exemple de réalisation, l'axe de basculement du capot 13 peut s'étendre en direction du récipient de travail 102 placé sur le socle 70, ou en direction du couvercle 103 fermant le récipient de travail 102 placé sur le socle 70.

La présente invention n'est nullement limitée aux exemples de réalisation décrits et à leurs variantes, mais englobe de nombreuses modifications dans le cadre des revendications.

## Revendications

1. Appareil électroménager de préparation culinaire, comportant un boîtier (1 ; 1') présentant un montant (10 ; 10') adjacent à un socle (70 ; 70'), un moteur (4) agencé dans le boîtier (1 ; 1'), un récipient de travail (102 ; 102') monté amovible sur le socle (70 ; 70'), un couvercle (103 ; 103') fermant le récipient de travail (102 ; 102'), une pièce de maintien (110 ; 110') montée sur le montant (10 ; 10'), la pièce de maintien (110 ; 110') étant mobile entre une position déverrouillée, dans laquelle le couvercle (103 ; 103') peut être mis en place et retiré du récipient de travail (102 ; 102') disposé sur le socle (70 ; 70'), et une position de verrouillage, dans laquelle la pièce de maintien (110 ; 110') maintient le couvercle (103 ; 103') sur le récipient de travail (102 ; 102') disposé sur le socle (70 ; 70'), un dispositif de sécurité (60 ; 60') comportant un interrupteur (185 ; 185'a) agencé dans le boîtier (1 ; 1'), une pièce mobile de sécurité (182 ; 197) actionnant l'interrupteur (185 ; 185'a), un moyen de rappel élastique (194 ; 198) repoussant la pièce mobile de sécurité (182 ; 197) dans une position dans laquelle l'interrupteur (185 ; 185'a) interdit le fonctionnement du moteur (4), **caractérisé en ce que** le couvercle (103 ; 103') peut être disposé sur le récipient de travail (102 ; 102') sans orientation particulière, le récipient de travail (102 ; 102') comportant une pièce de détection (124; 124') mobile et/ou déformable susceptible de coopérer d'une part avec le couvercle (103 ; 103') et d'autre part avec la pièce mobile de sécurité (182; 197), la pièce de détection (124 ; 124') coopérant avec le couvercle (103 ; 103') retenu sur le récipient de travail (102 ; 102') par la pièce de maintien (110 ; 110') en position de verrouillage et repoussant la pièce mobile de sécurité (182 ; 197) contre le moyen de rappel élastique (194; 198) vers une position dans laquelle l'interrupteur (185 ; 185'a) est susceptible d'autoriser le fonctionnement du moteur (4).

2. Appareil électroménager de préparation culinaire selon la revendication 1, **caractérisé en ce que** le montant (10 ; 10') présente une encoche latérale supérieure (68 ; 68') prévue pour recevoir la pièce de détection (124 ; 124') lorsque le récipient de travail (102 ; 102') est disposé sur le socle (70 ; 70').

3. Appareil électroménager de préparation culinaire selon la revendication 2, **caractérisé en ce que** l'encoche latérale supérieure (68 ; 68') est recouverte par la pièce de maintien (110 ; 110') occupant la position de verrouillage.

4. Appareil électroménager de préparation culinaire selon l'une des revendications 1 à 3, **caractérisé en ce que** la pièce de détection (124, 124') est montée coulissante dans un guidage extérieur (125; 125') issu du récipient de travail (102 ; 102').

5. Appareil électroménager de préparation culinaire selon l'une des revendications 1 à 4, **caractérisé en ce que** la pièce mobile de sécurité (182) comporte une surface de came (195) prévue pour actionner l'interrupteur (185), la pièce mobile de sécurité (182) étant mobile selon une première direction sous l'action de la pièce de détection (124) et selon une deuxième direction transversale sous l'action d'une tige de transmission de sécurité (181) actionnée par la pièce de maintien (110).

6. Appareil électroménager de préparation culinaire selon l'une des revendications 1 à 4, **caractérisé en ce que** la pièce de maintien (110') occupant la position de verrouillage coopère avec un autre interrupteur (185'b) appartenant au dispositif de sécurité (60').

7. Appareil électroménager de préparation culinaire selon l'une des revendications 1 à 5, **caractérisé en ce que** la pièce de maintien (110) est formée par un capot (13) monté basculant sur le montant (10) selon un axe s'étendant en direction du récipient de travail (102) placé sur le socle (70), ou en direction du couvercle (103) fermant le récipient de travail (102) placé sur le socle (70), et **en ce que** le capot (13) comporte un élément d'accrochage (56) coopérant avec un élément de retenue (51) monté dans le boîtier (1), l'élément d'accrochage. (56), respectivement l'élément de retenue (51), étant monté mobile, l'élément monté mobile étant associé à un bouton de déverrouillage (52).

## Claims

1. A household electrical appliance for preparing food, said appliance comprising a housing (1; 1') having an upright (10; 10') adjacent to a stand (70; 70'), a motor (4) arranged in the housing (1; 1'), a work receptacle (102; 102') mounted removably on the base (70; 70'), a lid (103; 103') closing the work receptacle (102; 102'), a holder piece (110; 110') mounted on the upright (10; 10'), the holder piece (110, 110') being mounted to move between an unlocked position, in which the lid (103; 103') can be put in place on and removed from the work receptacle (102; 102') as placed on the stand (70; 70'), and a locking position, in which the holder piece (110; 110') holds the lid (103; 103') on the work receptacle (102; 102') as placed on the stand (70; 70'), a safety device (60; 60') including a switch (185; 185'a) arranged in the housing (1; 1'), a movable safety piece (182; 197) actuating the switch (185; 185'a), and resilient return means (194; 198) urging the movable safety piece (182; 197) back into a position in which the switch (185; 185'a) prevents the motor (4) from operating, said household electrical appliance being **characterized in that** the lid (103; 103') can be placed on the work receptacle (102; 102') without any particular angular positioning, the work receptacle (102; 102') being provided with a detection piece (124; 124') that is movable and/or deformable and that is suitable for co-operating firstly with the lid (103; 103') and secondly with the movable safety piece (182; 197), the detection piece (124; 124') co-operating with the lid (103; 103') retained on the work receptacle (102; 102') by the holder piece (110; 110') in the locking position and urging the movable safety piece (182; 197) against thrust from the resilient return means (194; 198) towards a position in which the switch (185; 185'a) can allow the motor (4) to operate.

2. A household electrical appliance for preparing food according to claim 1, **characterized in that** the upright (10; 10') is provided with a top side notch (68; 68') designed to receive the detection piece (124; 124') when the work receptacle (102; 102') is placed on the stand (70; 70').

3. A household electrical appliance for preparing food according to claim 2, **characterized in that** the top side notch (68; 68') is covered by the holder piece (110; 110') when said holder piece is in the locking position.

4. A household electrical appliance for preparing food according to any one of claims 1 to 3, **characterized in that** the detection piece (124, 124') is mounted to slide in external guide means (125; 125') integral with the work receptacle (102; 102').

5. A household electrical appliance for preparing food according to any one of claims 1 to 4, **characterized in that** the movable safety piece (182) is provided with a cam surface (195) designed to actuate the switch (185), the movable safety piece (182) being mounted to move in a first direction under the action of the detection piece (124) and in a transverse second direction under the action of a safety transmission rod (181) actuated by the holder piece (110).

6. A household electrical appliance for preparing food according to any one of claims 1 to 4, **characterized in that** when the holder piece (110') is in the locking position, said holder piece co-operates with another switch (185'b) belonging to the safety device (60').

7. A household electrical appliance for preparing food according to any one of claims 1 to 5, **characterized in that** the holder piece (110) is formed by a cover (13) mounted to pivot on the upright (10) about an axis extending towards the work receptacle (102) as placed on the stand (70), or towards the lid (103) closing the work receptacle (102) as placed on the stand (70), and **in that** the cover (13) is provided with a latch element (56) co-operating with a retaining element (51) mounted in the housing (1), the latch element (56) or the retaining element (51) being mounted to move, the movably mounted element being associated with an unlocking button (52).

## Patentansprüche

1. Elektrohaushaltsgerät zur Nahrungsmittelzubereitung, mit einem Gehäuse (1; 1'), das eine an einen Sockel (70; 70') angrenzende Säule (10; 10') aufweist, einem im Gehäuse (1; 1') angeordneten Motor (4), einem Arbeitsbehälter (102; 102'), der abnehmbar am Sockel (70; 70') angebracht ist, einem Deckel (103; 103'), der den Arbeitsbehälter (102; 102') verschließt, einem Halteteil (110; 110'), das an der Säule (10; 10') angebracht ist, wobei das Halteteil (110; 110') beweglich ist zwischen einer entriegelten Stellung, in welcher der Deckel (103; 103') auf den Arbeitsbehälter (102; 102'), der auf dem Sockel (70; 70') angeordnet ist, aufgesetzt und von diesem entfernt werden kann, und einer Verriegelungsstellung, in der das Halteteil (110; 110') den Deckel (103; 103') auf dem Arbeitsbehälter (102; 102') hält, welcher auf dem Sockel (70; 70') angeordnet ist, mit einer Sicherheitsvorrichtung (60; 60'), die einen im Gehäuse (1; 1') angeordneten Schalter (185; 185'a) aufweist, einem beweglichen Sicherheitsteil (182; 197), das den Schalter (185; 185'a) betätigt, und einem elastischen Rückstellmittel (194; 198), welches das bewegliche Sicherheitsteil (182; 197) in eine Stellung zurückdrückt, in welcher der Schalter (185; 185'a) den Betrieb des Motors (4) verhindert, **dadurch gekennzeichnet, dass** der Deckel (103; 103') ohne besondere Ausrichtung auf dem Arbeitsbehälter (102; 102') aufgesetzt sein kann, wobei der Arbeitsbehälter (102; 102') ein bewegliches und/oder verformbares Erfassungsteil (124; 124') aufweist, das einerseits mit dem Deckel (103; 103') und andererseits mit dem beweglichen Sicherheitsteil (182; 197) zusammenwirken kann, wobei das Erfassungsteil (124; 124') mit dem Deckel (103; 103') zusammenwirkt, der von dem Halteteil (110; 110') in einer Verriegelungsstellung auf dem Arbeitsbehälter (102; 102') gehalten ist und das bewegliche Sicherheitsteil (182; 197) gegen das elastische Rückstellmittel (194; 198) in eine Stellung zurückdrückt, in welcher der Schalter (185; 185'a) den Betrieb des Motors (4) gestatten kann.

2. Elektrohaushaltsgerät zur Nahrungsmittelzubereitung nach Anspruch 1, **dadurch gekennzeichnet, dass** die Säule (10; 10') eine obere seitliche Kerbe (68; 68') aufweist, die dazu vorgesehen ist, das Erfassungsteil (124; 124') aufzunehmen, wenn der Arbeitsbehälter (102; 102') auf dem Sockel (70; 70') angeordnet ist.

3. Elektrohaushaltsgerät zur Nahrungsmittelzubereitung nach Anspruch 2, **dadurch gekennzeichnet, dass** die obere seitliche Kerbe (68; 68') von dem Halteteil (110; 110') bedeckt ist, das sich in der Verriegelungsstellung befindet.

4. Elektrohaushaltsgerät zur Nahrungsmittelzubereitung nach einem der Ansprüche 1 bis 3, **dadurch gekennzeichnet, dass** das Erfassungsteil (124; 124') in einer äußeren Führung (125; 125') gleitend angebracht ist, welche aus dem Arbeitsbehälter (102; 102') hervorgeht.

5. Elektrohaushaltsgerät zur Nahrungsmittelzubereitung nach einem der Ansprüche 1 bis 4, **dadurch gekennzeichnet, dass** das bewegliche Sicherheitsteil (182) eine Kurvenfläche (195) aufweist, die zur Betätigung des Schalters (185) vorgesehen ist, wobei das bewegliche Sicherheitsteil (182) unter der Wirkung des Erfassungsteils (124) in eine erste Richtung und unter der Wirkung einer von dem Halteteil (110) betätigten Sicherheitsübertragungsstange (181) in eine zweite, querverlaufende Richtung beweglich ist.

6. Elektrohaushaltsgerät zur Nahrungsmittelzubereitung nach einem der Ansprüche 1 bis 4, **dadurch gekennzeichnet, dass** das Halteteil (110'), das sich in der Verriegelungsstellung befindet, mit einem anderen Schalter (185'b) zusammenwirkt, der zur Sicherheitsvorrichtung (60') gehört.

7. Elektrohaushaltsgerät zur Nahrungsmittelzubereitung nach einem der Ansprüche 1 bis 5, **dadurch gekennzeichnet, dass** das Halteteil (110) durch eine Haube (13) gebildet ist, die so an der Säule (10) angebracht ist, dass sie gemäß einer Achse heruntergeklappt werden kann, die sich in Richtung des auf dem Sockel (70) angeordneten Arbeitsbehälters (102) oder in Richtung des Deckels (103) erstreckt, der den auf dem Sockel (70) angeordneten Arbeitsbehälter (102) verschließt, und dass die Haube (13) ein Einhakelement (56) aufweist, das mit einem im Gehäuse (1) angebrachten Rückhalteelement (51) zusammenwirkt, wobei das Einhakelement (56) bzw. das Rückhaltelement (51) beweglich angebracht ist und das beweglich angebrachte Element einem Entriegelungsknopf (52) zugeordnet ist.
